# EUROPÄISCHE PATENTANMELDUNG

(11) **EP 0 843 123 A1**
(43) Veröffentlichungstag der Anmeldung: **20.05.1998**
(21) Anmeldenummer: 97114633.7
(22) Anmeldetag: 23.08.1997
(51) Int. Cl.: F16M 11/04

(54) **Tragarm**

(30) Priorität: 28.09.1996 DE 29616976 U
(71) Anmelder: H.-J. Bernstein GmbH, 32479 Hille (DE)
(72) Erfinder: Weiss, Jürgen, 32312 Lübbecke (DE)
(74) Vertreter: Stracke, Alexander, Dipl.-Ing.

(57) **Zusammenfassung**

Gegenstand der Erfindung ist ein Tragarm (1) zur beweglichen Anbringung eines Gehäuses, eines Steuergerätes oder dergleichen an einem Gestell, einer Maschine oder dergleichen. Der Tragarm (1) besteht aus einem ersten Lagerbock (2) und einem zweiten Lagerbock (3) sowie aus zwei Tragprofilen (4, 5). Diese sind endseitig mit den Lagerböcken (2, 3) gelenkig verbunden und relativ zueinander längsbeweglich.

Die Längsverschiebbarkeit der beiden Tragprofile (4, 5) zueinander ist durch eine im Inneren des als Hohlprofil (4) ausgebildeten ersten Tragarmes angeordnete Klemm-oder Blockiervorrichtung (7, 6) einstellbar, wobei die Klemm- oder Blockiervorrichtung (7, 6) durch eine zumindest teilweise außerhalb des Hohlprofiles (4) liegende Betätigungsvorrichtung betätigbar ist.

Durch diese Konstruktion wird erreicht, daß der Tragarm (1) insgesamt bei Bedarf gegen unbeabsichtigtes Verschwenken praxisgerecht gesichert werden kann.

## Beschreibung

Die vorliegende Erfindung betrifft einen Tragarm zur beweglichen Anbringung eines Gehäuses, eines Steuergerätes oder dergleichen an einem Gestell, einer Maschine oder dergleichen, bestehend aus einem ersten Lagerbock und einem zweiten Lagerbock sowie aus zwei Tragprofilen, welche jeweils endseitig mit den Lagerböcken gelenkig verbunden und relativ zueinander längsbeweglich sind, wobei die beiden Lagerböcke beim Verschwenken des Tragarmes in parallel zueinander verlaufenden Ebenen bewegt werden und ein erstes Tragprofil als Hohlprofil ausgebildet ist, innerhalb dessen das zweite Tragprofil angeordnet ist.

Aufgabe der vorliegenden Erfindung ist es, einen Tragarm der gattungsgemäßen Art zu schaffen, der bei Bedarf gegen unbeabsichtigtes Verschwenken praxisgerecht gesichert werden kann.

Diese Aufgabe wird erfindungsgemäß dadurch gelöst, daß die Längsverschiebbarkeit der beiden Tragprofile zueinander durch eine im Inneren des Hohlprofiles angeordnete Klemm- oder eine Blockiervorrichtung einstellbar ist, wobei die Klemm- oder die Blockiervorrichtung durch eine zumindest teilweise außerhalb des Hohlprofiles liegende Betätigungsvorrichtung betätigbar ist.

Die Klemm- oder die Blockiervorrichtung liegt somit bis auf zur Betätigung erforderliche Teile der Betätigungsvorrichtung innerhalb des ersten, als Hohlprofil ausgebildeten Tragprofiles, so daß durch die Klemm- oder die Blockiervorrichtung das äußere Erscheinungsbild des Tragarmes nicht beeinträchtigt wird.

Je nach Gestaltung der Klemm- oder der Blockiervorrichtung kann der Tragarm nach dem Lösen der Klemm- oder der Blockiervorrichtung durch die von außen zugänglichen Teile der Betätigungsvorrichtung in jeder beliebigen Stellung festgesetzt bzw. bei Bedarf gelöst und in eine andere Position gebracht werden.

Weitere Merkmale der Erfindung sind Gegenstand von Unteransprüchen.

In den beigefügten Zeichnungen sind Ausführungsbeispiele der Erfindung dargestellt, die im folgenden näher beschrieben werden.

Es zeigen:
- Figur 1 (a-h): teilweise im Schnitt dargestellte Seitenansichten sowie jeweils zugehörige Querschnitte von Tragarmen nach verschiedenen Ausführungsbeispielen der Erfindung,
- Figur 2: eine Seitenansicht eines erfindungsgemäßen Tragarmes mit andeutungsweise gezeigten unterschiedlichen Verschwenkpositionen,
- Figur 3: eine Detaildarstellung einer Blockiervorrichtung eines Tragarmes entsprechend dem Ausführungsbeispiel nach Figur 1a,
- Figur 4: eine vergrößerte Darstellung des Schnittbereiches durch einen Tragarm gemäß der Figur 1a,
- Figur 5: eine vergrößerte Darstellung des Schnittbereiches durch einen Tragarm gemäß der Figur 1b,
- Figur 6: eine vergrößerte Darstellung des Schnittbereiches durch einen Tragarm gemäß der Figur 1c,
- Figur 7: eine vergrößerte Darstellung des Schnittbereiches durch einen Tragarm gemäß der Figur 1d,
- Figur 8: eine vergrößerte Darstellung des Schnittbereiches durch einen Tragarm gemäß der Figur 1e,
- Figur 9: eine vergrößerte Darstellung des Schnittbereiches durch einen Tragarm gemäß der Figur 1f,
- Figur 10: eine vergrößerte Darstellung des Schnittbereiches durch einen Tragarm gemäß der Figur 1 g,
- Figur 11: eine vergrößerte Darstellung des Schnittbereiches durch einen Tragarm gemäß der Figur 1h,
- Figur 12: eine vergrößerte Darstellung des Querschnittes des Tragarmes gemäß Figur 1a,
- Figur 13: eine vergrößerte Darstellung des Querschnittes durch einen Tragarm gemäß Figur 1b,
- Figur 14: eine vergrößerte Darstellung des Schnittbereiches durch einen Tragarm gemäß der Figur 1c,
- Figur 15: eine vergrößerte Darstellung des Querschnites durch einen Tragarm gemäß der Figur 1g,
- Figur 16: eine vergrößerte Darstellung des Querschnittes durch einen Tragarm gemäß der Figur 1h.

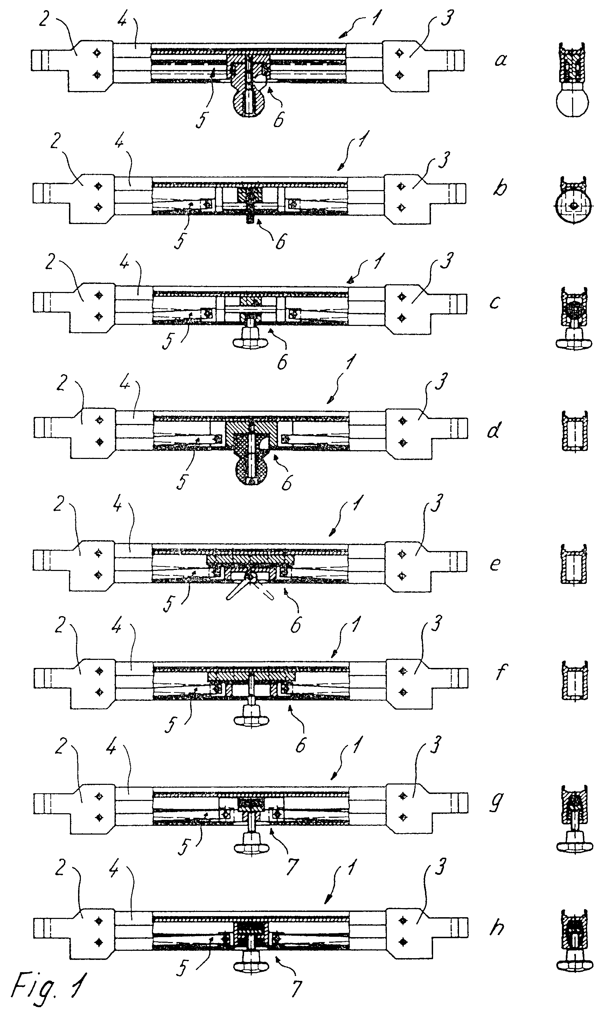

In den Figuren 1a - 1h sind verschiedene Ausführungsbeispiele erfindungsgemäßer Tragarme 1 sowohl in teilweise geschnittener Seitenansicht sowie im Querschnitt dargestellt.

Jeder Tragarm 1, der zur beweglichen Anbringung eines Gehäuses, eines Steuergerätes oder dergleichen an einem Gestell, einer Maschine oder dergleichen vorgesehen ist, besteht im wesentlichen aus einem ersten Lagerbock 2 und einem zweiten Lagerbock 3 sowie aus zwei Tragprofilen 4 und 5.

Die beiden Tragprofile 4 und 5 sind jeweils endseitig mit den Lagerböcken 2 und 3 gelenkig verbunden und relativ zueinander längsbeweglich, wobei im Falle einer Bewegung dieser beiden Tragprofile 4 und 5 die beiden Lagerböcke 2 und 3 beim Verschwenken des Tragarmes 1 in parallel zueinander verlaufenden Ebenen bewegt werden.

Das erste Tragprofil 4 ist als Hohlprofil ausgebildet und innerhalb dieses Hohlprofiles ist das zweite Tragprofil 5 - von außen nicht sichtbar - angeordnet.

Die Längsverschiebbarkeit der beiden Tragprofile 4 und 5 zueinander ist im Ausführungsbeispiel der Erfindung gemäß den Figuren 1a - 1f jeweils durch eine Blockiervorrichtung 6 und im Falle der Ausführungsbeispiele nach den Figuren 1g und 1h durch eine Klemmvorrichtung 40 einstellbar.

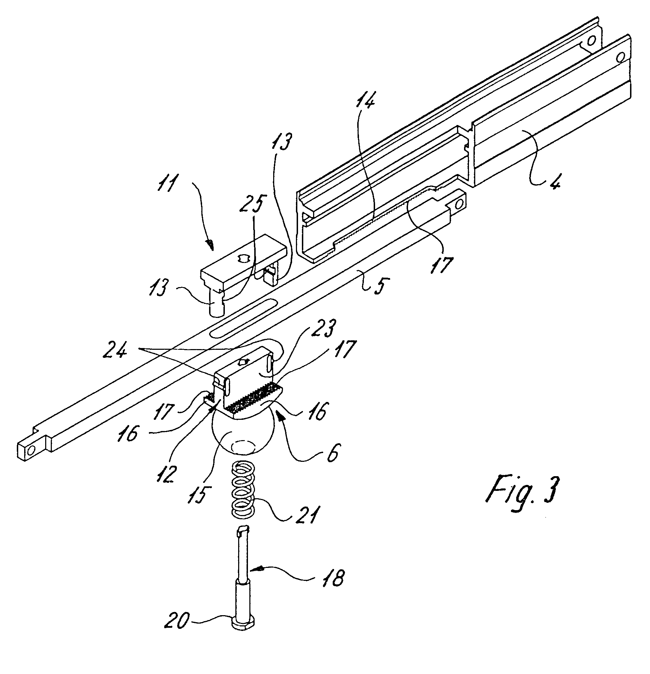

Auf diese Klemm- oder Blockiervorrichtungen 40 bzw. 6 wird unter Bezugnahme auf die Figuren 3 - 16 noch ausführlich eingegangen.

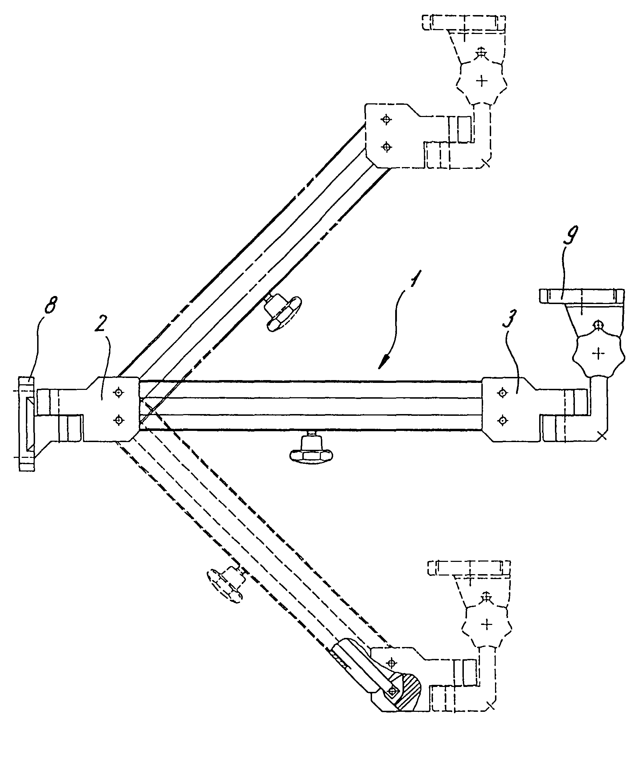

Figur 2 verdeutlicht, daß an dem ersten Lagerbock 2 eines Tragarmes 1 eine Konsole 8 angeschlossen wird, die zur Festlegung des Tragarmes an einem Gestell, einer Maschine oder dergleichen dient.

Am zweiten Lagerbock 3 wird ein Träger 9 für ein Steurgerät, ein Gehäuse oder dergleichen angeschlossen.

Die Verbindung zwischen dem ersten Lagerbock 2 und der Konsole 8 ermöglicht ein Schwenken des Tragarmes 1 um eine lotrechte Achse. Die Halterung 9 kann relativ zum zweiten Lagerbock 3 ebenfalls um eine lotrechte Achse geschwenkt werden. Außerdem ermöglicht die Halterung 9 noch ein Schwenken eines Gehäuses, eines Steuergerätes oder dergleichen um eine horizontale Achse.

Somit kann ein vom Tragarm 1 abgestütztes Gehäuse, Steuergerät oder dergleichen in für seine Bedienung erforderliche oder gewünschte Stellungen gebracht werden.

Aus den Figuren 3, 4 und 12 ergibt sich der Aufbau und die Wirkungsweise der Blockiervorrichtung 6 gemäß dem Ausführungsbeispiel nach Figur 1a.

Die vorerwähnten Figuren machen deutlich, daß das zweite Tragprofil 5, welches einteilig ausgebildet ist, mit einer Querdurchbrechung 10 versehen ist. In diese Querdurchbrechung 10 greift ein etwa U-förmiges Füllstück 11 ein, wobei die offene Seite dieses etwa U-förmigen Füllstückes 11 nach unten weist.

Von der Unterseite her greift ein Formteil 12 in den Bereich zwischen den beiden Seitenschenkeln 13 des Füllstückes 11 in dieses Füllstück 11 und damit auch in die Querdurchbrechung des Seitentragprofiles 5 ein. Das Formteil 12 durchtritt das als Hohlprofil ausgebildete zweite Tragprofil 4 im Bereich eines Langloches 14. In dem außerhalb des Hohlprofiles 4 liegenden Bereich ist das Formteil 12 mit einem Betätigungsgriff 15 sowie mit zwei parallel zu der Unterseite des Hohlprofiles 4 verlaufenden Flanken 16 ausgestattet, wobei diese Flanken 16 ebenso wie die im Umgebungsbereich des Langloches 14 liegende Fläche des Hohlprofiles 4 mit Rastverzahnungen 17 ausgestattet sind.

Das Formteil 12 wird von einem Zapfen 18 durchtreten, der mit seinem vorderen, innerhalb des Hohlprofiles 4 liegenden Endbereich formschlüssig und axial gesichert im Quersteg 19 des Füllstückes 11 festgelegt ist. Der Quersteg 19 des Füllstückes 11 liegt auf der Innenseite des Tragprofiles 5 auf.

Das äußere Ende des Zapfens 18 ist mit einem Stützkopf 20 versehen, auf den sich eine Feder 21 abstützt. Diese Feder 21 liegt andererseits auf einem Bund 22 des Formteiles 12 auf.

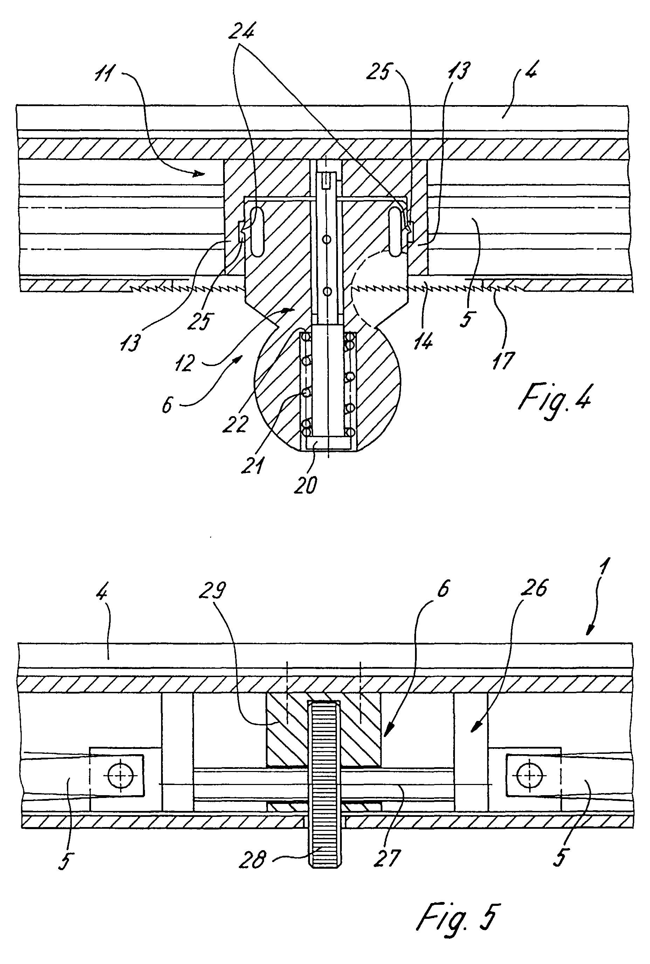

Das Formte 12 ist in seinem zwischen die beiden Seitenschenkel 13 des Füllstückes 11 eingreifenden Bereich 23 mit Rastnocken 24 versehen, die in montiertem Zustand in entsprechende Aussparungen 25 der beiden Seitenschenkel 13 des Füllstückes 11 eingreifen. Dies geht insbesondere aus Figur 4 hervor.

Die wie vorstehend beschrieben aufgebaute Blockiervorrichtung 6 funktioniert in folgender Weise:

Durch die Feder 21 wird das Formteil 12 an die Unterseite des Hohlprofiles 4 ständig angezogen. Dabei liegen die Flanken 16 an der Unterseite des Hohlprofiles 4 unter Eingriff der gegenseitigen Rastverzahnungen 17 an. In einer derartigen Position ist eine relative Längsverschiebung der beiden Tragprofile 4 und 5 zueinander nicht möglich. Mit anderen Worten ist der Tragarm 1 in einer derartigen Position blockiert.

Wird nun das Formteil 12 entgegen der Wirkung der Feder 21 nach unten gezogen, was durch den Betätigungsgriff 15 ohne weiteres möglich ist, wird die Verrastung zwischen dem Formteil 12 und dem Hohlprofil 4 aufgehoben. Nun können die beiden Tragprofile 4 und 5 relativ zueinander verschoben werden, was je nach Bewegungsrichtung zu einem Schwenken des Tragarmes 1 nach unten oder nach oben führt. Wird in einer neu herbeigeführten Verschwenkposition das Formteil 12 wieder in Verrastungsstellung gebracht, ist die neu eingenommene Verschwenkposition wirksam gesichert.

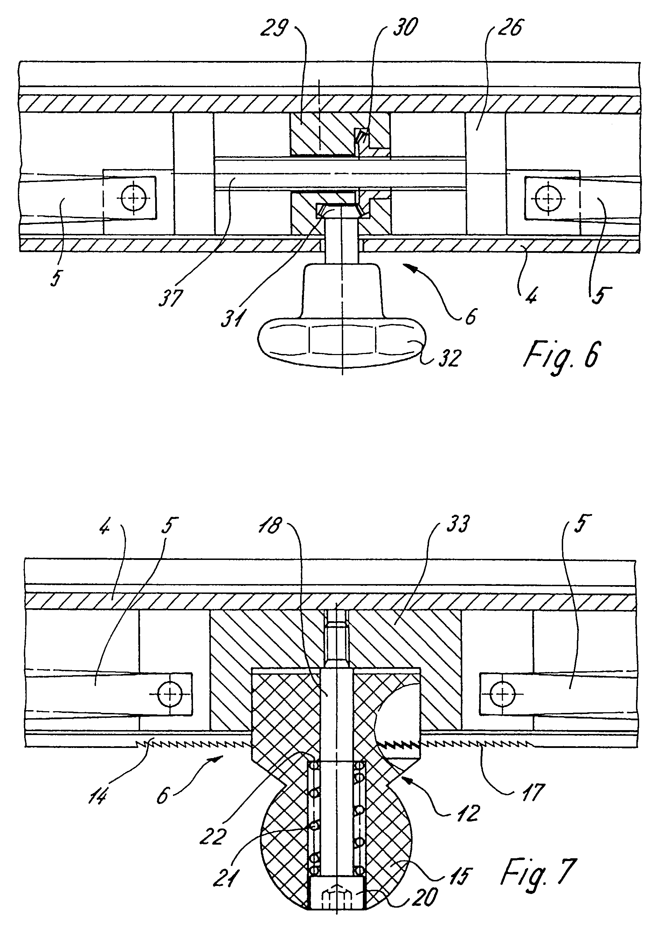

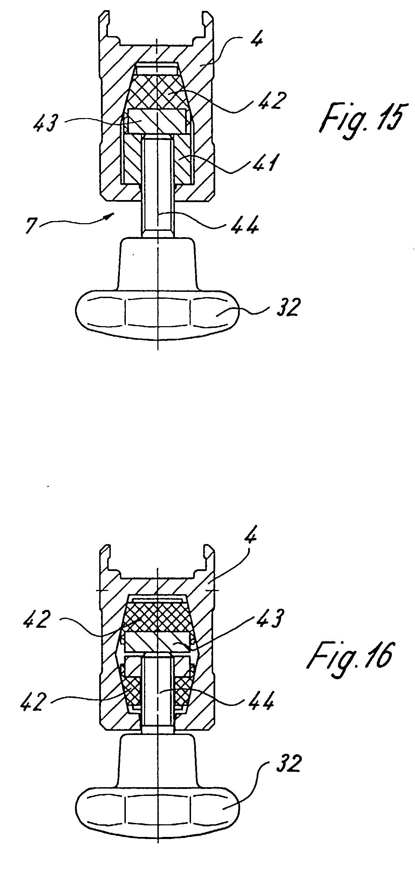

In den Figuren 5 und 13 ist ein weiteres Ausführungsbeispiel für eine Blockiervorrichtung 6 dargestellt.

Bei diesem Ausführungsbeispiel der Erfindung ist das zweite Tragprofil 5 zweiteilig ausgebildet und etwa im mittleren Bereich des gesamten Tragarmes 1 gelenkig an einem innerhalb des Hohlprofiles 4 längs verschiebbaren Gleitstück 26 angeschlossen.

Dieses Gleitstück 26 ist mit einem in Längsrichtung des Hohlprofiles 4 verlaufenden Gewindebolzen 27 ausgestattet. Auf diesem Gewindebolzen 27 ist eine Betätigungsmutter 28 angeordnet, die teilweise aus dem Hohlprofil 4 nach unten herausragt um diese Betätigungsmutter handhaben zu können. Wie Figur 5 deutlich zeigt, ist die Betätigungsmutter 28 innerhalb des Hohlprofiles 4 gegen Verschiebung in Längsrichtung des Hohlprofiles 4 gesichert, und zwar dadurch, daß diese Betätigungsmutter 28 in einen fest mit dem Hohlprofil 4 verbundenen, geschlitzten Klotz 29 eingreift.

Wird die Mutter 28 betätigt, so wird je nach Drehrichtung das Gleitstück 26 und damit auch das zweiteilige Tragprofil 5 nach links oder nach rechts verschoben, was entweder ein nach unten oder ein nach oben Schwenken des Tragarmes zur Folge hat. Eine selbsttätige Verstellung des Tragarmes ist aufgrund der Selbsthemmung des Gewindes zwischen der Betätigungsmutter 28 und dem Gewindebolzen 27 nicht möglich.

Eine dem Ausführungsbeispiel nach den Figuren 5 und 13 sehr ähnliche Konstruktion ergibt sich aus dem Ausführungsbeispiel nach den Figuren 6 und 14.

Auch hier ist das zweite Tragprofil 5 zweiteilig ausgebildet und gelenkig mit einem Gleitstück 26 verbunden. Das Gleitstück 26 trägt wieder einen in Längsrichtung des Hohlprofiles 4 verlaufenden Gewindebolzen 27, auf dem ein Kegelrad 30 angeordnet ist. Dieses Kegelrad 30 ist axial unverschiebbar in einem Bock 29 gehalten, der wiederum fest mit dem Hohlprofil 4 verbunden ist.

Über ein mit dem Kegelrad 30 kämmendes, ebenfalls kegelartig verzahntes Tellerrad 31 am stirnseitigen Ende eines Drehgriffes 32 kann das Kegelrad 30 gedreht werden, was dann zu einer Verschiebung des Gleitstückes 26 nach links oder nach rechts führt.

Auch hier ist aufgrund der Selbsthemmung ein unbeabsichtigtes Verstellen des Tragarmes 1 vermieden.

Das Ausführungsbeispiel gemäß Figur 7 zeigt eine Blockiervorrichtung 6, die konstruktiv Ähnlichkeiten mit dem Ausführungsbeispiel nach den Figuren 3 und 4 aufweist.

Ein durch eine Feder 21 belastetes Formteil 12 greift in ein Zwischenstück 33 ein, welches längs verschiebbar im Hohlprofil 4 gelagert ist. An diesem Zwischenstück 33 sind die inneren Enden des wiederum zweiteilig ausgebildeten Tragprofiles 5 gelenkig angeschlossen. Das Formteil 12 ist analog dem Ausführungsbeispiel nach den Figuren 3 und 4 mit verzahnten Flanken ausgestattet und durchtritt das Hohlprofil 4 im Bereich eines Langloches 14. Im Anlagebereich des Formteiles 12 ist das Hohlprofil 4 ebenfalls mit einer Rastverzahnung 17 ausgestattet.

Das Formteil 12 wird von einem Zapfen 18 durchtreten, der in das Zwischenstück 33 eingeschraubt und somit axial gesichert ist. Auf einem Stützkopf 20 dieses Zapfens 18 stützt sich wiederum die Feder 21 ab, andererseits liegt die Feder 21 auf einem Bund 22 des Formteiles 12 auf.

Die Wirkung dieser Blockiervorrichtung 6 entspricht im wesentlichen der Wirkung der Blockiervorrichtung 6 nach dem Ausführungsbeispiel gemäß den Figuren 3 und 4. Wird das Formte 12 entgegen der Wirkung der Feder 21 nach unten gezogen, wird die Blockierung durch die Rastverzahnung 17 aufgehoben und eine relative Längsverschiebung der beiden Tragprofile 4 und 5 zueinander ist möglich und damit ein Verschwenken des Tragarmes 1. Kommt die Rastverzahnung 17 wieder in Eingriff, ist eine Verschiebung der Tragprofile 4 und 5 gegeneinander blockiert.

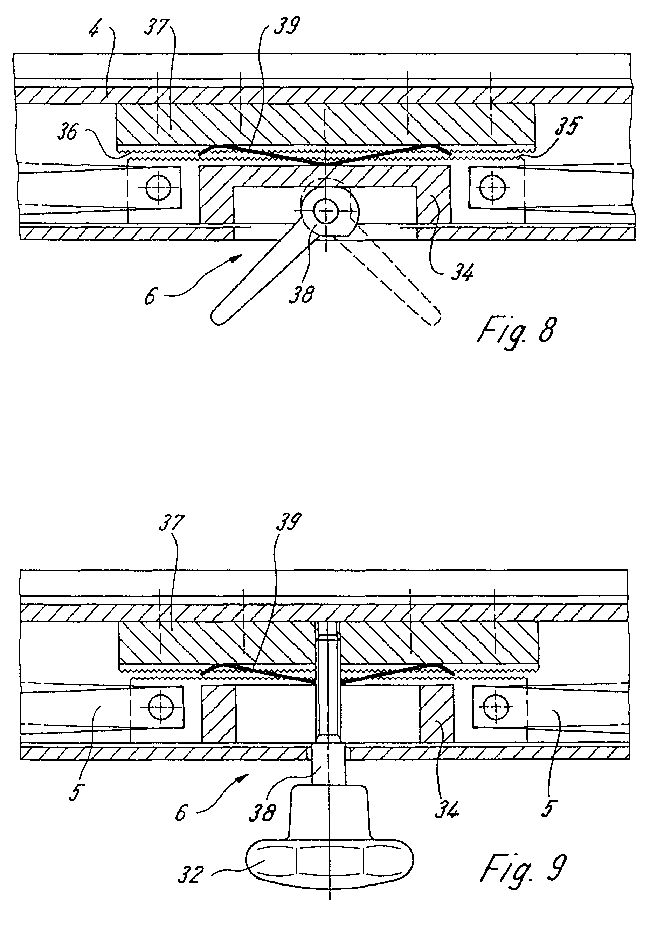

Die Figuren 8 und 9 zeigen ebenfalls untereinander konstruktive Ähnlichkeiten hinsichtlich der Ausbildung der Blockiervorrichtung 6. In beiden Fällen ist innerhalb des Hohlprofiles 4 ein Zwischenstück 34 angeordnet,

an dem die innenliegenden Enden des wiederum zweiteilig ausgebildeten Tragprofiles 5 gelenkig angeschlossen sind. Dieses Zwischenstück 34 ist mit einer Verzahnung 35 ausgestattet, dem eine Verzahnung 36 eines Blockierstückes 37 gegenüberliegt, wobei das Blockierstück 37 fest im Hohlprofil 4 montiert ist.

Sowohl beim Ausführungsbeispiel gemäß Figur 8 wie auch beim Ausführungsbeispiel gemäß Figur 9 kann zur Blockierung der Verschwenkbarkeit das Zwischenstück 34 an das Blockierstück 37 angepreßt werden.

Die Unterschiede im Detail liegen darin, daß beim Ausführungsbeispiel gemäß Figur 8 das Andrücken des Zwischenstückes 34 an das Blockierstück 37 über einen Exzenterhebel 38 erfolgt und im Falle des Ausführungsbeispieles nach Figur 9 über eine mit einem Drehgriff 32 ausgestattete Schraube 38.

Gemeinsam ist wiederum beiden Ausführungsbeispielen, daß zwischen dem Blockierstück 37 einerseits und dem Zwischenstück 34 andererseits eine Formfeder 39 angeordnet ist, durch die einerseits das Lösen einer Blockierstellung erleichtert wird und die andererseits auch im gelösten Zustand noch eine gewisse Reibung zwischen den relativ zueinander beweglichen Teilen bewirkt.

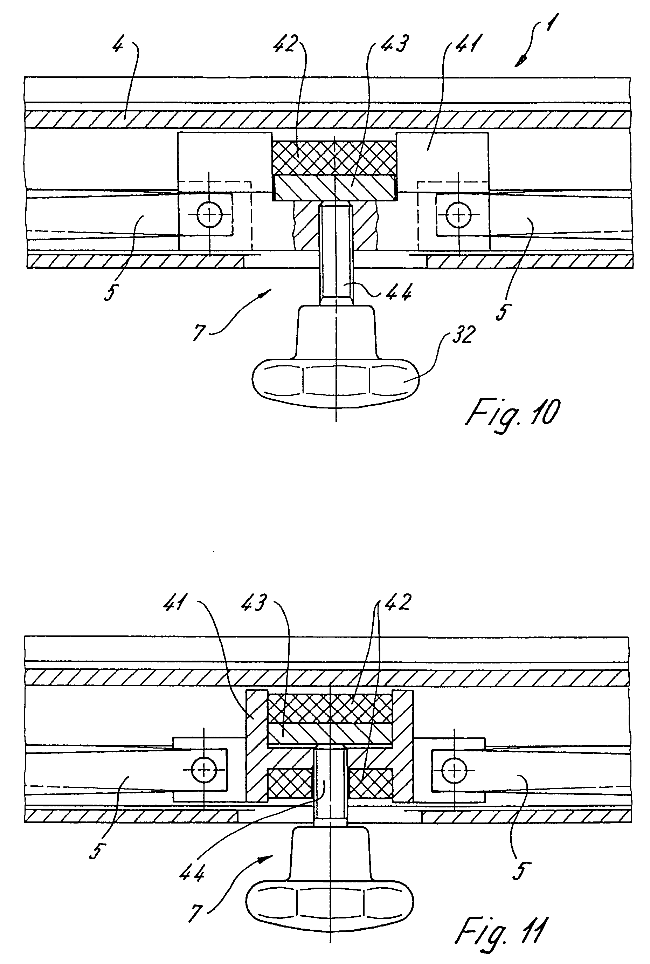

In den Figuren 10 und 15 ist ein Tragarm 1 gezeigt, der mit einer Klemmvorrichtung 7 ausgestattet ist.

Das Tragprofil 5 ist wiederum zweiteilig ausgebildet und an einem Verbindungsteil 41 gelenkig angeschlossen, welches längs verschiebbar im Hohlprofil 4 angeordnet ist. Innerhalb dieses Verbindungsstückes 41 ist ein aus elastischem Material gefertigtes Klemmstück 42 angeordnet, welches, wie insbesondere Figur 15 zeigt, im Querschnitt etwa keilförmig gestaltet ist. Auf dieses Klemmstück 42 ist eine Klemmplatte 43 über eine mit einem Drehgriff 32 versehene Schraube 44 aufpreßbar. Das Klemmstück 42 kann entsprechend dem Anpreßdruck über die Schraube 44 mehr oder weniger stark an die Flanken des Hohlprofiles 4 angepreßt werden. Hierdurch wird eine entsprechende Reibkraft oder Klemmkraft zur Klemmung des zweiteiligen Tragprofiles 5 gegenüber dem Hohlprofil 4 aufgebaut.

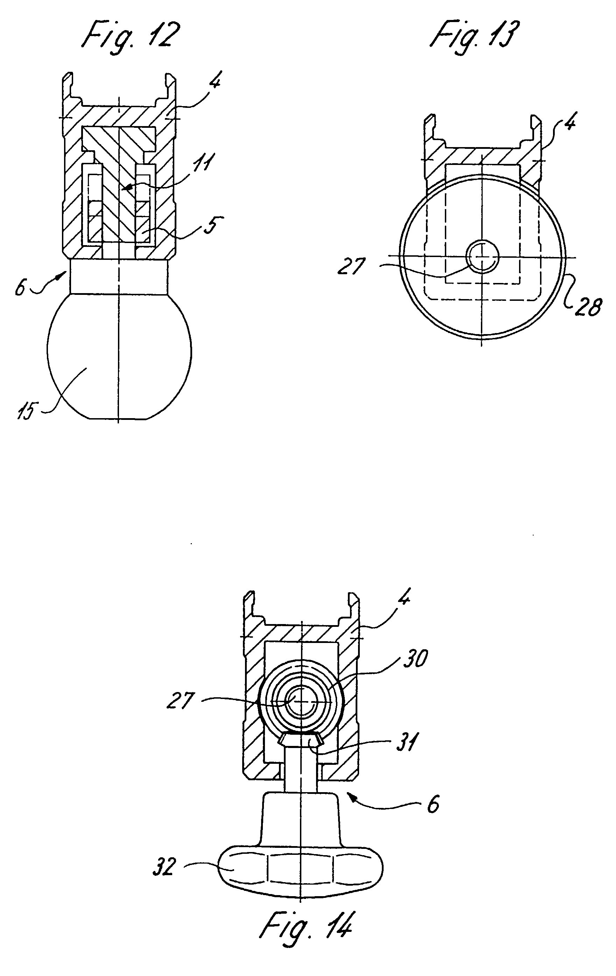

Das in den Figuren 11 und 16 dargestellte Ausführungsbeispiel unterscheidet sich vom Ausführungsbeispiel gemäß den Figuren 10 und 15 lediglich dadurch, daß zwei Klemmstücke 42 einander gegenüberliegend vorgesehen sind, so daß entsprechend höhere Reib- oder Klemmkräfte aufgebracht werden können.

## Patentansprüche

1. Tragarm zur beweglichen Anbringung eines Gehäuses, eines Steuergerätes oder dergleichen an einem Gestell, einer Maschine oder dergleichen, bestehend aus einem ersten Lagerbock und einem zweiten Lagerbock sowie aus zwei Tragprofilen, welche jeweils endseitig mit den Lagerböcken gelenkig verbunden und relativ zueinander längsbeweglich sind, wobei die beiden Lagerböcke beim Verschwenken des Tragarmes in parallel zueinander verlaufenden Ebenen bewegt werden und ein erstes Tragprofil als Hohlprofil ausgebildet ist, innerhalb dessen das zweite Tragprofil angeordnet ist, **dadurch gekennzeichnet, daß** die Längsverschiebbarkeit der beiden Tragprofile (4, 5) zueinander durch eine im Inneren des Hohlprofiles (4) angeordnete Klemm- oder eine Blockiervorrichtung (7, 6) einstellbar ist, wobei die Klemm- oder die Blockiervorrichtung (7, 6) durch eine zumindest teilweise außerhalb des Hohlprofiles 4 liegende Betätigungsvorrichtung betätigbar ist.

2. Tragarm nach Anspruch 1, **dadurch gekennzeichnet, daß** die Blockiervorrichtung (6) aus einem federnd gegen eine teilweise verzahnte Außenfläche des Hohlprofiles (4) angezogenen Formteil mit einer Rastverzahnung (17) besteht, welches mittelbar oder unmittelbar in eine Querdurchbrechung (10) des zweiten Tragprofiles (5) formschlüssig eingreift.

3. Tragarm nach Anspruch 2, **dadurch gekennzeichnet, daß** das Formteil (12) in ein etwa U-förmiges Füllstück (11) eingreift, welches in die Querdurchbrechung (10) des zweiten Tragprofiles (5) eingesetzt ist.

4. Tragarm nach Anspruch 2 oder 3, **dadurch gekennzeichnet, daß** das Füllstück (11) in Löserichtung des Formteiles (12) gegenüber dem zweiten Tragprofil (5) gegen Verschiebung gesichert ist.

5. Tragarm nach einem oder mehreren der vorhergehenden Ansprüche, **dadurch gekennzeichnet, daß** am Füllstück (11) ein Zapfen (18) axial unverschiebbar befestigt ist, welcher das Formteil (12) durchtritt und an seinem freien Ende einen Stützkopf (20) für eine Feder (21) aufweist, die sich mit ihrem anderen Ende auf einem Bund (22) des Formteiles (12) abstützt.

6. Tragarm nach Anspruch 1, **dadurch gekennzeichnet, daß** die Blockiervorrichtung (6) aus einem im Hohlprofil (4) längsverschiebbaren und einem in Längsrichtung des Hohlprofiles verlaufenden Gewindebolzen (27) versehenen Gleitstück (26) sowie aus einer auf dem Gewindebolzen (27) angeordneten, gegen Verschiebung in Längsrichtung des Hohlprofiles (4) gesicherten und teilweise aus dem Hohlprofil (4) herausragenden Betätigungsmutter (28) besteht, wobei das zweite Tragprofil (5) zweiteilig ausgebildet und mit dem Gleitstück (26) jeweils gelenkig verbunden ist.

7. Tragarm nach Anspruch 1, **dadurch gekennzeichnet, daß** die Blockiervorrichtung (6) aus einem mit einem zweiteilig ausgebildeten zweiten Tragprofil (5) jeweils gelenkig verbundenen Zwischenstück (34) und einem im Hohlprofil (4) festgelegten Blockierstück (37) besteht, gegen welches das Zwischenstück (34) durch eine von außerhalb des Hohlprofiles (4) betätigbare Schraube (38) anpreßbar ist.

8. Tragarm nach Anspruch 1, **dadurch gekennzeichnet, daß** die Blockiervorrichtung (6) aus einem mit einem zweiteilig ausgebildeten zweiten Tragprofil (5) jeweils gelenkig verbundenen Zwischenstück (34) und einem im Hohlprofil (4) festgelegten Blockierstück (37) besteht, gegen welches das Zwischenstück (34) durch einen im Hohlprofil (4) gelagerten Exzenterhebel (38) anpreßbar ist.

9. Tragarm nach Anspruch 7 oder 8, **dadurch gekennzeichnet, daß** das Blockierstück (37) und das Zwischenstück (34) im gegenseitigen Anlagebereich mit einer korrespondierenden Verzahnung (35, 36) versehen sind.

10. Tragarm nach einem der Ansprüche 7 - 9, **dadurch gekennzeichnet, daß** zwischen dem Blockierstück (37) und dem Zwischenstück (34) eine Formfeder (39) angeordnet ist.

11. Tragarm nach Anspruch 1, **dadurch gekennzeichnet, daß** die Blockiervorrichtung (6) aus einem im Hohlprofil (4) längs verschiebbaren und einem in Längsrichtung des Hohlprofiles (4) verlaufenden Gewindebolzen (27) versehenen Gleitstück sowie aus einem auf dem Gewindebolzen (27) angeordneten, gegen Verschieben in Längsrichtung des Hohlprofiles (4) gesicherten Kegelrad (30) besteht, wobei das Kegelrad (30) mit einem am stirnseitigen Ende eines Drehgriffes (32) angeordneten, ebenfalls kegelartig verzahnten Tellerrad (31) kämmt.

12. Tragarm nach Anspruch 1, **dadurch gekennzeichnet, daß** die Blockiervorrichtung (6) aus einem im Hohlprofil (4) längs verschiebbar gelagerten und mit dem zweiteilig ausgebildeten Tragprofil (5) gelenkig verbundenen Zwischenstück (33) sowie aus einem in dieses Zwischenstück (33) eingreifenden Formteil (12) besteht, wobei das Formteil (12) das Hohlprofil (4) im Bereich eines Langloches (14) durchtritt und gegenüber dem Hohlprofil (4) durch eine Rastverzahnung (17) festlegbar ist.

13. Tragarm nach Anspruch 1, **dadurch gekennzeichnet, daß** die Klemmvorrichtung aus einem im Hohlprofil (4) längs verschiebbar angeordneten Gleitstück (41) und mindestens einem Klemmstück (42) besteht, wobei das Klemmstück oder die Klemmstücke (42) aus elastischem Material hergestellt und über eine mit einem Drehgriff (32) verbundene Schraube (44) an die Innenwandungen des Hohlprofiles (4) anpreßbar ist bzw. sind.

14. Tragarm nach Anspruch 13, **dadurch gekennzeichnet, daß** daß das Klemmstück (42) oder die Klemmstücke (42) im Querschnitt keilförmig ausgebildet sind.
